(19) Europäisches Patentamt
European Patent Office
Office européen des brevets

(11) **EP 3 125 402 A1**

(12) **EUROPÄISCHE PATENTANMELDUNG**

(43) Veröffentlichungstag:
**01.02.2017 Patentblatt 2017/05**

(51) Int Cl.:
*H02J 11/00* (2006.01)    *H02M 5/06* (2006.01)

(21) Anmeldenummer: **16182015.4**

(22) Anmeldetag: **29.07.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **30.07.2015   DE 102015214564**

(71) Anmelder: **Power Plus Communications AG 68167 Mannheim (DE)**

(72) Erfinder:
• **Schneider, Johanna**
  **74731 Walldürn (DE)**
• **Merk, Daniel**
  **74821 Mosbach (DE)**

(74) Vertreter: **Patent- und Rechtsanwälte Ullrich & Naumann**
**PartG mbB**
**Schneidmuehlstrasse 21**
**69115 Heidelberg (DE)**

(54) **ENERGIEKOPPLER ZUM VERSORGEN EINES ELEKTRISCHEN GERÄTS**

(57)    Es ist ein Energiekoppler zum Versorgen eines elektrischen Gerätes aus einem Energieversorgungsnetzwerk, insbesondere eines Mittelspannungsnetzwerks, offenbart. Der Energiekoppler (1) weist einen Spannungsteiler auf, der mit einem Versorgungseingang (2) des Energiekopplers (1) verbunden ist und eine erste Impedanz ($C_1$) und eine in Reihe geschaltete zweite Impedanz ($C_2$) aufweist. Ein Versorgungsausgang (4) des Energiekopplers (1) ist mit einem Abgriff (3) zwischen der ersten und der zweiten Impedanz ($C_1$, $C_2$) verbunden. Dabei ist der Spannungsteiler dazu ausgebildet ist, aus einer an dem Versorgungseingang (2) anliegenden ersten Spannung ($U_1$) eine zweite Spannung ($U_2$) zu erzeugen und an dem Versorgungsausgang (4) eine vordefinierte Leistung ($P$) bereitzustellen. Die erste Impedanz ($C_1$) ist derart dimensioniert, dass bei einer maximal zulässigen Spannung ($U_{max}$) am Versorgungsausgang (4) des Energiekopplers (1) zum Erreichen der vordefinierten Leistung ($P$) ein Mindeststrom ($\hat{I}_{min}$) durch die erste Impedanz ($C_1$) bereitgestellt werden kann.

Fig. 1

**Beschreibung**

Die Erfindung betrifft einen Energiekoppler zum Versorgen eines elektrischen Geräts sowie ein System bestehend aus einem entsprechenden Energiekoppler und einem elektrischen Gerät.

Sehr viele elektrische Geräte, wie beispielsweise Messgeräte, Kommunikationsgeräte, Modems oder Recheneinheiten, sind für eine Energieversorgung mittels einer Wechselspannung auf Niederspannungsniveau ausgestaltet, d.h. für Wechselspannungen mit einem Effektivwert bis einschließlich 1000 V. Üblicherweise wird das elektrische Gerät dann an ein Niederspannungsnetz angeschlossen, das eine Wechselspannung mit beispielsweise 230 V (Phase gegen Neutralleiter) bei 50 Hz oder 120 V (Phase gegen Neutralleiter) bei 60 Hz bereitstellt, um lediglich zwei weit verbreitete Niederspannungsnetze zu nennen.

Soll ein derartiges elektrisches Gerät aus einem Mittelspannungsnetz (Wechselspannungen mit Effektivwerten über 1 kV bis einschließlich 52 kV) mit Energie versorgt werden, muss die zu hohe Mittelspannung auf Niederspannungsniveau gebracht werden. Hierzu wird üblicherweise die Mittelspannung an den Leitungen des Mittelspannungsnetzes, beispielsweise den Freileitungen, abgegriffen und mittels eines Transformators auf eine für das elektrische Gerät geeignete Niederspannung heruntertransformiert. Nachteilig an dieser Art der Energieversorgung ist, dass die notwendigen Transformatoren groß und schwer sind. Dadurch ist es praktisch nicht möglich, das elektrische Gerät direkt an eine Freileitung anzubringen. Der Transformator muss stets über eine geeignete Halterung an einem Mast oder dergleichen befestigt werden. Ferner sind derartige Mittelspannungstransformatoren trotz der üblicherweise geringen bezogenen Leistung teuer.

Selbst wenn der Transformator in das elektrische Gerät integriert wird, ändert sich hieran wenig. Zum einen muss das elektrische Gerät hierfür vollständig überarbeitet werden. Zum anderen bleibt auch dann das Problem der Baugröße und des Gewichts bestehen, so dass weiterhin hohe Kosten entstehen und stets eine geeignete Montage an einem Mast oder dergleichen notwendig ist.

Ein Fachmann wird erkennen, dass das zuvor beschriebene Problem nicht ausschließlich auf ein Mittelspannungsnetzwerk und ein mit Niederspannung zu versorgendes elektrisches Gerät beschränkt ist, auch wenn das Problem bei größeren Spannungsdifferenzen besonders deutlich zutage tritt. Prinzipiell besteht das Problem immer dann, wenn das Energieversorgungsnetzwerk eine erste Spannung bereitstellt und das elektrische Gerät, das aus dem Energieversorgungsnetzwerk versorgt werden soll, nur eine zweite, kleinere Versorgungsspannung verarbeiten kann.

Der vorliegenden Erfindung liegt daher die Aufgabe zugrunde, eine Möglichkeit der Energieversorgung eines elektrischen Gerätes anzugeben, bei der auf kostengünstige Art und Weise eine erste Spannung eines Energieversorgungsnetzwerks in eine zweite, niedrigere Spannung für das elektrische Gerät gewandelt werden kann und die gleichzeitig platzsparend realisiert werden kann.

Erfindungsgemäß wird die voranstehende Aufgabe durch die Merkmale des Anspruchs 1 gelöst. Danach ist ein Energiekoppler bereitgestellt, über den das elektrische Gerät mit Energie versorgt werden kann, wobei der Energiekoppler einen Spannungsteiler aufweist, der mit einem Versorgungseingang des Energiekopplers verbunden ist und eine erste Impedanz und eine in Reihe geschaltete zweite Impedanz aufweist, wobei ein Versorgungsausgang des Energiekopplers mit einem Abgriff zwischen der ersten und der zweiten Impedanz verbunden ist, wobei der Spannungsteiler dazu ausgebildet ist, aus einer an dem Versorgungseingang anliegenden ersten Spannung eine zweite Spannung zu erzeugen und an dem Versorgungsausgang eine vordefinierte Leistung bereitzustellen, und wobei die erste Impedanz derart dimensioniert ist, dass bei einer maximal zulässigen Spannung am Ausgang des Energiekopplers zum Erreichen der vordefinierten Leistung ein Mindeststrom durch die erste Impedanz bereitgestellt werden kann.

Ferner ist die voranstehende Aufgabe durch ein System gemäß Anspruch 10 gelöst. Das System besteht aus dem erfindungsgemäßen Energiekoppler und einem elektrischen Gerät, wobei das elektrische Gerät mit dem Versorgungsausgang des Energiekopplers verbunden ist, wobei das elektrische Gerät in einem Normalbetrieb eine vordefinierte Leistung aus dem Energiekoppler bezieht.

In erfindungsgemäßer Weise ist erkannt worden, dass sich Spannungsteiler - verblüffender Weise - sehr gut für die Versorgung einer breiten Vielfalt von elektrischen Geräten aus einem Energieversorgungsnetzwerk eignen. Dabei besteht der Spannungsteiler aus mindestens zwei in Reihe zueinander geschalteten Impedanzen, wobei zwischen den Impedanzen ein Abgriff gebildet ist. Ein erster Anschluss des Spannungsteilers wird mit einer Phase des Energieversorgungsnetzwerks verbunden. Ein zweiter Anschluss, der am relativ zu dem ersten Anschluss gegenüberliegenden Ende des Spannungsteilers angeordnet ist, wird mit einem anderen Leiter des Energieversorgungsnetzwerks verbunden, üblicherweise mit dem Neutralleiter. Der Abgriff wird mit dem Anschluss des elektrischen Gerätes für die Phase verbunden, während die zweite Anschlussleitung des elektrischen Geräts mit dem zweiten Anschluss verbunden wird. Damit liegt zwischen dem ersten und dem zweiten Anschluss die erste Spannung an, während zwischen Abgriff und zweitem Anschluss die zweite Spannung anliegt, die das elektrische Gerät versorgt. Der Einfachheit wegen wird nachfolgend die Impedanz, die zwischen erstem Anschluss und Abgriff angeordnet ist, als erste Impedanz bezeichnet und die Impedanz, die zwischen Abgriff und zweitem Anschluss angeordnet ist, als zweite Impedanz.

Üblicherweise hat ein derartiger Spannungsteiler den Nachteil, dass das elektrische Gerät an dem Abgriff die zweite Spannung nicht unerheblich beeinflusst. Da jedes elektrische Gerät eine Eingangsimpedanz aufweist, ist diese Eingangsimpedanz parallel zur zweiten Impedanz geschaltet und verändert dadurch die Gesamtimpedanz zwischen dem Abgriff und dem zweiten Anschluss. Damit fällt über die erste Impedanz ein von der Eingangsimpedanz des elektrischen Geräts abhängiger Anteil der ersten Spannung ab, so dass sich die zweite Spannung ändert. Hinzu kommt, dass sich der Einfluss des elektrischen Geräts auf die zweite Spannung in Abhängigkeit der bezogenen Leistung ändert. Damit wäre ein derartiger Spannungsteiler eigentlich weniger für die Versorgung eines elektrischen Geräts geeignet.

Erfindungsgemäß ist aber erkannt worden, dass viele elektrische Geräte eine relativ geringe Varianz bei der bezogenen Leistung haben. Hierzu gehören insbesondere BPL-Knoten, wie beispielsweise BPL-Modems oder BPL-Repeater, oder viele Messgeräte. Hier lässt sich üblicherweise sehr einfach eine vordefinierte Leistung $P$ ermitteln, die ein derartiges elektrisches Gerät in einem Normalbetrieb aus dem Energieversorgungsnetzwerk bezieht. Eine derartige vordefinierte Leistung P liegt bei gebräuchlichen BPL-Modems meist unter 10 W. Ein typischer Wert ist beispielsweise 3 W. Ein Normalbetrieb ist ein Betriebszustand des elektrischen Gerätes, bei dem kein Fehlerfall vorliegt und das elektrische Gerät in einer bestimmungsgemäßen Weise arbeitet.

Für die vordefinierte Leistung lässt sich in Kenntnis der Spannung $U_{max}$, die maximal am Versorgungseingang des elektrischen Geräts zulässig ist, ein Mindeststrom $\hat{I}_{min}$ berechnen, der durch die erste Impedanz bereitgestellt werden muss. Dabei gilt für den Effektivwert dieses Mindeststroms:

$$I_{\min} = \frac{P}{U_{\max}}$$

Daraus ergibt sich ein Scheitelwert des Mindeststroms als $\hat{I}_{min} = I_{min} \cdot \sqrt{2}$. Dieser Strom muss durch die erste Impedanz bereitgestellt werden. Wenn die erste Impedanz dazu ausgebildet ist, den Mindeststrom $\hat{I}_{min}$ bei gleichzeitig maximal einer Spannung $U_{max}$ am Abgriff zu liefern, kann ein derartiger Spannungsteiler problemlos zur Versorgung des elektrischen Gerätes genutzt werden. Daher weist der Energiekoppler zum Versorgen des elektrischen Geräts erfindungsgemäß einen Spannungsteiler auf, dessen erste Impedanz diese Anforderung erfüllt. Der erste Anschluss ist dabei mit einem Versorgungseingang des Energiekopplers verbunden, während der Abgriff ist mit einem Versorgungsausgang des Energiekopplers verbunden ist. Zwar ist die Ausgangsspannung am Versorgungseingang weiterhin von der Belastung durch das elektrische Gerät abhängig. Allerdings kann durch die erfindungsgemäßen Maßnahmen die Ausgangsspannung in einem Rahmen gehalten werden, der von den meisten elektrischen Geräten als Eingangsspannungstoleranz akzeptiert wird. Da die für den Spannungsteiler notwendigen Impedanzen üblicherweise relativ kompakt sind und gleichzeitig - zumindest im Vergleich zu einem entsprechenden Transformator - relativ günstig sind, ist eine kostengünstige Möglichkeit zur Versorgung eines elektrischen Gerätes geschaffen, die platzsparend realisiert werden kann.

Prinzipiell können die erste und die zweite Impedanz auf verschiedene Weisen gebildet sein. Zur Reduzierung der Verlustleistung bei gleichzeitig ausreichend hohen Impedanzwerten sind die Impedanzen vorzugsweise durch Kapazitäten gebildet. Nachfolgend wird die die erste Impedanz bildende Kapazität als erste Kapazität bezeichnet und die die zweite Impedanz bildende Kapazität als zweite Kapazität. Dabei muss lediglich die erste Kapazität auf die hohe erste Spannung ausgelegt sein, während die zweite auf die niedrigere zweite Spannung ausgelegt sein kann. Wenn beispielsweise - entsprechend dem bevorzugten Anwendungsfall - die erste Spannung eine Mittelspannung und die zweite Spannung eine Niederspannung ist, muss die erste Kapazität für Mittelspannung ausgelegt sein, während die zweite Kapazität für Niederspannung ausgelegt sein kann. Da Mittelspannungskapazitäten deutlich teurer und größer sind als Niederspannungskapazitäten und damit lediglich eine Mittelspannungskapazität notwendig wird, können auf diese Weise die Kosten und Baugröße des Energiekopplers weiter reduziert werden.

Bei der Nutzung des Energieversorgungsnetzwerks für Powerline-Kommunikation würde durch einen Spannungsteiler aus einer ersten und einer zweiten Kapazität ein Kurzschluss für hochfrequente Signale entstehen. Damit wäre eine Powerline-Kommunikation nicht mehr möglich. Daher umfasst der Spannungsteiler des Energiekopplers in einer bevorzugten Weiterbildung eine Spule, die zwischen der ersten und der zweiten Impedanz angeordnet ist. Da die Impedanz einer Spule bei zunehmender Frequenz steigt, entsteht dadurch eine ausreichend hohe Impedanz für Powerline- und andere hochfrequente Signale auf dem Energieversorgungsnetzwerk.

Zur Vermeidung einer Schwingungsneigung eines Spannungsteilers mit einer ersten und einer zweiten Kapazität und einer Spule umfasst der Spannungsteiler in einer weiteren bevorzugten Weiterbildung einen ohmschen Widerstand, der in Reihe zu der ersten und der zweiten Impedanz geschaltet ist. Dadurch werden aufkommende Schwingungen gedämpft. Dabei sollte der ohmsche Widerstand nicht zu niedrig sein, um eine effektive Dämpfung zu erzielen. Gleichzeitig erhöht ein hoher ohmscher Widerstand aber die Verlustleistung, so dass auch hohe Widerstandswerte vermieden werden sollten. Als gut geeignet haben sich ohmsche Widerstände im niedrigen einstelligen Q-Bereich erwiesen, beispielweise ein ohmscher Widerstand mit 1Ω. Bei der Verwendung eines Dämpfungswiderstands ist weitgehend unerheblich, in welcher Reihenfolge die einzelnen Komponenten des Spannungsteilers angeordnet sind. Bevorzugt folgen jedoch auf die erste Kapazität der ohmsche Widerstand, die Spule und danach die zweite Kapazität. Der Abgriff könnte in dieser Ausgestaltung zwischen der Spule und der zweite Kapazität gebildet sein.

Zur Beschränkung der Spannung am Versorgungsausgang ist die zweite Impedanz vorzugsweise derart dimensioniert, dass die Spannung am Versorgungsausgang bei einem Leerlauf am Versorgungsausgang einen oberen Spannungsgrenzwert nicht überschreitet. In einem Normalbetrieb, d.h. bei Vorhandensein eines bestimmungsgemäß funktionierenden elektrischen Geräts, das eine vordefinierte Leistung bezieht, ist die zweite Impedanz üblicherweise vernachlässigbar. Dies ändert sich dann, wenn das angeschlossene elektrische Gerät ausfällt (beispielsweise durch einen Defekt oder auch bei einem Austausch während Wartungsarbeiten) oder bei Schwankungen der Spannung im Energieversorgungsnetzwerk (beispielsweise durch Blitzschlag). In einem derartigen Fall ist die zweite Impedanz vorzugsweise derart dimensioniert, dass die Spannung am Versorgungsausgang unterhalb eines Grenzwertes bleibt. Dies dient nicht zuletzt zum Schutz eines neu angeschlossenen Geräts vor einer initial zu hohen Spannung.

Die Spannung, die am Versorgungsausgang anliegt, hängt nicht zuletzt von der Spannung ab, die am Energieversorgungsnetzwerk anliegt. Eine Spannung von 36 kV am Versorgungseingang führt naturgemäß zu einer deutlich anderen zweiten Spannung als eine Spannung von 1 kV. Daher sollte der Spannungsteiler des Energiekopplers auf die an dem Versorgungseingang zu erwartende Spannung angepasst sein. Dabei besteht prinzipiell die Möglichkeit, die erste Impedanz oder die zweite Impedanz in ihrer Größe auf die zu erwartende Eingangsspannung anzupassen. Technisch gesehen sind beide Möglichkeiten weitgehend identisch. Da allerdings - wie bereits ausgeführt - die erste Impedanz auf eine höhere Spannung angepasst sein muss als die zweite Impedanz und da Impedanzen für höhere Spannungen stets teurer sind als Impedanzen für niedrige Spannungen, empfiehlt es sich, die erste Impedanz für verschiedene erste Spannungen konstant zu halten und die zweite Impedanz zu variieren. Dies ermöglicht, wenige Varianten der teureren ersten Impedanz zu bevorraten, während eine größere Anzahl von Varianten für die günstigere zweite Impedanz notwendig ist. Auf diese Weise können die Kosten des Energiekopplers weiter reduziert werden.

Als zusätzlicher Schutz vor einer zu hohen Spannung am Versorgungsausgang des Energiekopplers kann zusätzlich ein Spannungsbegrenzer vorgesehen sein, der parallel zu dem Versorgungsausgang geschaltet ist. Dabei wird besonders bevorzugter Weise ein Gasableiter verwendet. Ein derartiger Spannungsbegrenzer zündet durch, wenn die Spannung eine Begrenzungsspannung überschreitet. Damit reduziert sich die Gesamtimpedanz der Parallelschaltung aus zweiter Impedanz, Spannungsbegrenzer und elektrischem Gerät. Üblicherweise stellt sich dann eine Gesamtimpedanz von nahe 0 $\Omega$ ein. Dadurch fällt über die erste Impedanz (und eventuell die Spule und den ohmschen Widerstand) die gesamte erste Spannung ab. Da die erste Impedanz üblicherweise einen relativ hohen Wert hat, bleibt der Ableitstrom über den Spannungsbegrenzer aber ausreichend gering.

Durch die beschriebene Verwendung des Spannungsteilers ist die erste Spannung stets größer als die zweite Spannung. Vorzugsweise ist die erste Spannung dabei mindestens doppelt so groß wie die zweite Spannung. Ganz besonders bevorzugter Weise ist die erste Spannung eine Mittelspannung und die zweite Spannung eine Niederspannung. Lediglich beispielhaft, jedoch nicht auf diese beschränkt, seien die Mittelspannungen 12 kV, 24 kV und 36 kV und die Niederspannungen 110 V, 120 V und 230 V genannt.

Wenn das anzuschließende elektrische Gerät im Wesentlich lediglich Wirkleistung bezieht, d.h. bei dem elektrischen Gerät entsteht keine Blindleistung oder entstehende Blindleistung wird vollständig oder zumindest weitgehend kompensiert, muss die erste Impedanz lediglich den Mindeststrom $\hat{I}_{min}$ bereitstellen. Wenn das elektrische Gerät aber einen nicht unerheblichen Anteil an Blindstrom erzeugt, so sollte die erste Impedanz zusätzlich zu dem Mindeststrom $\hat{I}_{min}$ einen Blindstrom für das elektrische Gerät bereitstellen können. In einer bevorzugten Weiterbildung ist die erste Impedanz daher ergänzend dazu ausgebildet, einen Blindstrom für das elektrische Gerät bereitzustellen

Prinzipiell lässt sich der erfindungsgemäße Energiekoppler im Zusammenhang mit den verschiedensten elektrischen Geräten einsetzen, solange für das elektrische Gerät eine vordefinierte Leistung, die das elektrische Gerät in einem Normalbetrieb bezieht, bestimmen lässt. Dies bedeutet üblicherweise, dass die in einem Normalbetrieb bezogene Leistung weitgehend konstant ist. Dies ist üblicherweise gegeben, wenn die bezogene Leistung im praktischen Einsatz um maximal $\pm$ 25 % von einer Nennleistung abweicht, besonders bevorzugter Weise um maximal $\pm$ 10 %.

Besonders gut lässt sich der erfindungsgemäße Energiekoppler im Zusammenhang mit einem BPL (Breitband Powerline)-Knoten einsetzen, d.h. einem Netzwerkknoten, der mittels Powerline-Signalen Daten mit einem anderen BPL-Knoten über die Leitungen des Energieversorgungsnetzwerks austauscht. Derartige BPL-Knoten weisen eine besonders konstante Leistungsaufnahme auf, insbesondere dann wenn relativ konstant Powerline-Signale empfangen und versendet werden.

BPL-Knoten nutzen Koppler, meist kapazitive Koppler, die die zu versendende Powerline-Signale in das Energieversorgungsnetzwerk einkoppeln bzw. zu empfangende Powerline-Signale aus dem Energieversorgungsnetzwerk auskoppeln. Dabei ist es prinzipiell denkbar, dass der Koppler zum Aus- bzw. Einkoppeln der Powerline-Signale gleichzeitig als erste Impedanz für den Energiekoppler genutzt wird, sofern die jeweiligen Randbedingungen für die Powerline-Kommunikation und die Energieversorgung miteinander in Einklang gebracht werden können. Da die Anforderungen an die Kommunikation aber üblicherweise nicht zu hoch sind, lässt sich dies in der Praxis oft bewerkstelligen.

Es gibt nun verschiedene Möglichkeiten, die Lehre der vorliegenden Erfindung in vorteilhafter Weise auszugestalten und weiterzubilden. Dazu ist einerseits auf die dem Anspruch 1 bzw. 10 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen

Fig. 1 ein Schaltbild eines Ausführungsbeispiels eines erfindungsgemäßen Energiekopplers, wobei die erste Impedanz durch eine erste Kapazität $C_1$ und die zweite Impedanz durch eine zweite Kapazität $C_2$ gebildet ist,

Fig. 2 ein Diagramm mit einem Zusammenhang zwischen der ersten Kapazität $C_1$ und dem an einem Versorgungsausgang des Energiekopplers ausgegebenen Stroms $I_2$ und

Fig. 3 ein Diagramm mit einem interpolierten Zusammenhang zwischen der ersten Spannung $U_1$ und der ersten Kapazität $C_1$.

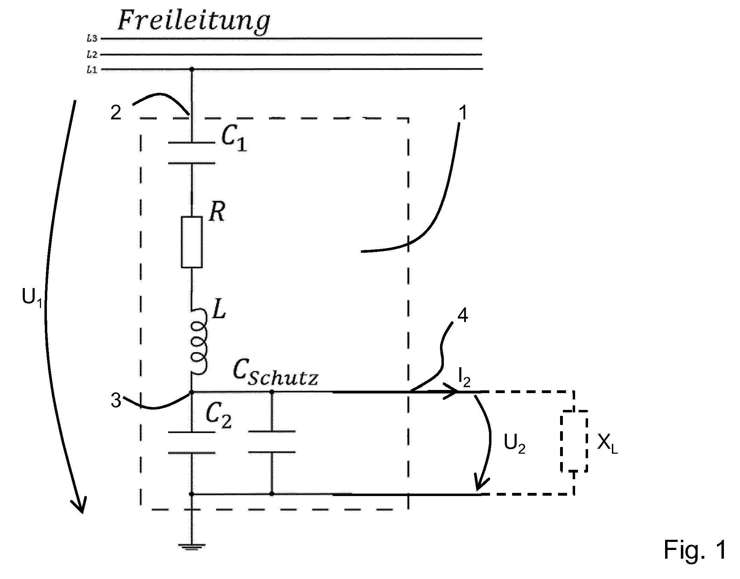

Fig. 1 zeigt ein Schaltbild eines Ausführungsbeispiels eines erfindungsgemäßen Energiekopplers. Der Energiekoppler 1 umfasst einen Spannungsteiler, der in dieser Ausgestaltung aus einer ersten Kapazität $C_1$ (erste Impedanz), einem ohmschen Widerstand $R$, einer Spule $L$ und einer zweiten Kapazität $C_2$ (zweite Impedanz) besteht. Die einzelnen Komponenten sind jeweils in Reihe zueinander geschaltet. Der dem Widerstand $R$ abgewandte Anschluss der ersten Kapazität $C_1$ - erster Anschluss des Spannungsteilers - bildet den Versorgungseingang 2. Der zweite Anschluss des Spannungsteilers ist auf der gegenüberliegenden Seite gebildet (in Fig. 1 unten) und ist mit Masse verbunden. Zwischen Spule $L$ und zweiter Kapazität $C_2$ ist ein Abgriff 3 gebildet, der mit dem Versorgungsausgang 4 des Energiekopplers 1 verbunden ist. Zwischen dem Versorgungsausgang 4 und Masse ist das elektrische Gerät angeschlossen, dessen Impedanz in Fig. 1 als $X_L$ eingezeichnet ist. Parallel zu der zweiten Kapazität $C_2$ ist ein Gasableiter als Überspannungsschutz geschaltet, dessen parasitäre Kapazität in Fig. 1 mit $C_{Schutz}$ dargestellt ist. Der Versorgungseingang 2 ist mit einer der Seile einer Freileitung eines Mittelspannungsnetzwerkes verbunden. In dem in Fig. 1 dargestellten Fall ist dies die Phase L1.

Beim Betrieb des Energiekopplers liegt über dem Spannungsteiler zwischen dem Versorgungseingang 2 und dem zweiten Anschluss des Spannungsteilers die erste Spannung $U_1$ an. Am Versorgungsausgang liegt relativ zur Masse die Spannung $U_2$ an. Das elektrische Gerät bezieht aus dem Versorgungsausgang einen Strom $I_2$ und damit eine Leistung $P$.

Nachfolgend werden zwei Fälle für eine Dimensionierung der Schaltung nach Fig. 1 genauer betrachtet. Als elektrisches Gerät wird hier ein BPL-Modem betrachtet.

## I. Ausschließlich Wirkleistung am elektrischen Gerät

In dem ersten Fall wird durch das Modem lediglich Wirkleistung bezogen, d.h. das Modem erzeugt entweder keine Blindleistung oder die entstehende Blindleistung ist durch geeignete Maßnahmen kompensiert. Letzteres kann beispielsweise durch eine aktive PFC-Schaltung im Netzteil des Modems realisiert werden. Die einzelnen Komponenten des Kopplers können wie folgt dimensioniert werden, wobei die benötigte Wirkleistung der Last - die vordefinierte Leistung - beispielhaft 3 W betrage.

### 1. Koppelkapazität $C_1$

Für die Auslegung des Spannungsteilers sollte beachtet werden, dass der am Versorgungsausgang verfügbare Strom einen maximalen Wert annehmen wird, wobei der Wert von der Eingangsspannung und der Größe der ersten Kapazität abhängen wird. Dieser Strom kann nicht überschritten werden. Um eine Spannung am Versorgungsausgang zu erhalten, welche im Bereich von 100 V bis 400 V (gemessene mögliche Eingangsspannung des Modems) kann der zugehörige Strom bei einer Leistung von 3 W ermittelt werden.

Oberer Grenzwert $U_{max}$ = 400 V:

$$I_{min} = \frac{3\,\text{W}}{400\,\text{V}} = 7,5\,\text{mA} \rightarrow \hat{I}_{min} = 10,6\,\text{mA}$$

Unterer Grenzwert $U_{min}$ = 100 V

$$I_{min} = \frac{3\,\text{W}}{100\,\text{V}} = 30\,\text{mA} \;\rightarrow\; \hat{I}_{min} = 42,4\,\text{mA}$$

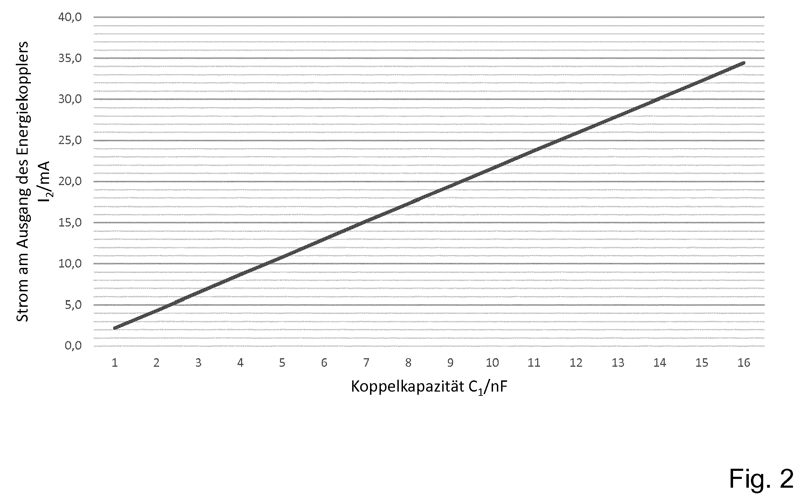

Fig. 2 stellt den Strom in Abhängigkeit der Kapazität dar. Anhand der berechneten Stromwerte kann aus dem Diagramm abgelesen werden, dass mindestens eine Kapazität von 4,5 nF benötigt wird.

Die dargestellte Berechnung bestätigt, dass das Modem mit einer ersten Kapazität entsprechend einer Koppelkapazität in einem BPL-Signalkoppler betrieben werden kann. Dieser hat eine Größe von 5 nF.

$\rightarrow C_1$ = 5 nF

Die Anpassung auf die verschiedenen Spannungsebenen durch Veränderung der Koppelkapazität $C_1$ ist theoretisch möglich. Es ist jedoch einfacher, aufgrund der besonderen Eigenschaften einer Koppelkapazität, das Niederspannungsterminal und damit die zweite Kapazität $C_2$ anzupassen. Dort können Standardprodukte verwendet werden, welche nicht für die Hochspannung ausgelegt sein müssen. Daneben entspricht die verwendete Koppelkapazität derer im Signalkoppler. Eine Reduzierung ist nicht notwendig. Somit können alle drei Leiterseile der Freileitung mit der gleichen Kapazität belastet werden, wenn beispielsweise eine Kapazität für den Energiekoppler und zwei weitere Kapazitäten zum Ankoppeln des BPL-Modems für eine Modulation des BPL-Signals Phase gegen Phase verwendet wird.

## 2. Zweite Kapazität $C_2$ im Niederspannungsterminal

Im Normalbetrieb ist die zweite Kapazität $C_2$ vernachlässigbar. Aber in Sonderfällen, wie im unbelasteten Fall (beispielsweise bei einem Defekt des Modems), bei Schwankungen der Spannung der Freileitung im Bereich von $U_n$ - 10% bis $U_m$ oder bei einer plötzlichen Überspannung durch beispielsweise einen Blitzeinschlag, beschränkt dieser Kondensator die Ausgangsspannung. Er wird in Abhängigkeit von der Spannungsebene der Freileitung angepasst. Die in Tabelle 1 dargestellten Werte wurden durch eine Simulation ermittelt. Dabei ist die zweite Kapazität $C_2$ bei der 12 kV Freileitung so ausgelegt, dass sie keinen Einfluss auf den maximalen Strom am Ausgang des Energiekopplers ausübt. Die höheren Spannungsebenen sind daran so angepasst, dass die Ausgangsspannung und der Ausgangsstrom des Kopplers für die unterschiedlichen Spannungsebenen jeweils gleich sind. Also gilt Folgendes:

Voraussetzung: $P$ = 3 W $\rightarrow U \approx 280$ V und $I \approx 10,8$ mA

*Tabelle 1: Dimensionierung der Kapazität im Niederspannungsterminal in Abhängigkeit von der Spannungsebene*

|        | 12 kV | 24 kV | 36 kV |
|--------|-------|-------|-------|
| $C_2$  | 10 nF | 200 nF | 335 nF |

## 3. Spule $L$ zur Filterung

Der Spannungsteiler besteht aus zwei Kapazitäten mit einer Wertigkeit im Nanofarad-Bereich. Bei einer Frequenz von 1 MHz bis 30 MHz (dem gebräuchlichen Frequenzbereich von BPL-Signalen) bedeutet dies, dass die Impedanz niederohmig ist. Ein hochfrequenter Kurzschluss wäre die Folge. Aus diesem Grund sorgt in diesem Fall eine Spule in dem Pfad des Spannungsteilers dafür, dass der Spannungsteiler im Falle einer hochfrequenten Spannung einen großen Impedanzwert annimmt. Angenommen wird ein Wert von ca. 10 kΩ. Daraus kann für den schlechtesten Fall (kleinste Impedanz), also bei der geringsten Frequenz des BPL-Signals von 1 MHz, eine Induktivität von ungefähr 2 mH verwendet werden

$$X_L = \omega L$$

$$L = \frac{X_L}{\omega} = \frac{X_L}{2\pi f}$$

$$L = \frac{1 * 10^4\,\Omega}{2\pi * 1 * 10^6\,\text{Hz}} = 1,6\,\text{mH} \approx 2\,\text{mH}$$

$\rightarrow L$ = 2 mH

### 4. Widerstand *R* zur Dämpfung

Die Spule in Kombination mit den Kapazitäten verursacht Resonanzschwingungen. Ein zusätzlicher Widerstand *R* dämpft diese Schwingungen. Dabei sollten an dem Widerstand keine zu große Verlustleistung bzw. keine zu hohe Temperaturen entstehen. Durch Simulation ergibt sich als sinnvoller Wert

$\rightarrow R = 1\,\Omega$

### 5. Schutzeinrichtung

Als Überspannungsschutz ist ein Gasableiter verwendet ($C_{Schutz}$), welcher den Grobschutz des Energiekopplers übernimmt. Schaltet der Schutzleiter durch, fällt die komplette Spannung über der ersten Kapazität $C_1$ ab, welche für die hohen Überspannungen ausgelegt ist. Es kommt dort nicht zu Schäden.

Um einen Gasableiter entsprechend auszulegen und zu verhindern, dass er bei Normalbetrieb anspricht, sollte für die Auslegung der Ansprechspannung zum einen die Toleranz der Netzspannung mit +10 % und zum anderen die Toleranz des Gasableiters mit meist ± 20 % miteinbezogen werden.

$$(U_{max} + 10\,\%) * \sqrt{2} = (U_{Anspr.} - 20\,\%)$$

$U_{max}$ = Maximale Eingangsspannung des Netzteils des Modems $U_{Anspr.}$ = Ansprechspannung des Gasableiters

Da die maximale Spannung am Eingang des Netzteils des Modems durch den Scheitelwert der Spannung definiert ist, ergibt sich formelmäßig aus diesem Zusammenhang:

$$U_{max} * \sqrt{2} * 1,1 = U_{Anspr.} * 0,8$$

$$U_{Anspr.} = \frac{U_{max} * \sqrt{2} * 1,1}{0,8}$$

Bei einer maximalen Spannung am Eingang des Netzteils des Modems vom 400 V ergibt sich:

$$U_{Anspr.} = \frac{400\,\text{V} * \sqrt{2} * 1,1}{0,8} = 777,8\,\text{V}$$

Durch eine Simulation kann gezeigt werden, dass aufgrund der hohen ersten Kapazität $C_1$ der Strom auch bei kurzzeitig auftretender hoher Spannung gering ist. Bei einem 8/20µs-Impuls (d.h. einem Impuls, der in 8µs ansteigt und in 20µs abfällt) von 125 kV auf eine für 24 kV ausgelegte erste Kapazität $C_1$ fließt nach Auslösen des Ableiters maximal ein Strom von 80 A durch den Ableiter. Die meisten Ableiter sind für Ströme von mehreren Kiloamper ausgelegt.

### II. elektrisches Gerät ohne Blindleistungskompensation mit hohem Blindleistungsanteil

In dem zweiten Fall wird bei dem Modem keine Blindleistungskompensation durchgeführt (CAT4). Sollte keine Blindleistungskompensation im Netzteil integriert werden, weist das Modem einen hohen Anteil an Blindleistung auf. Diese besteht zu großen Teilen aus Verzerrungsblindleistung.

Um das Modem zu versorgen, muss eine größere erste Kapazität $C_1$ verwendet werden, da die erste Kapazität sonst nicht in der Lage wäre, zusätzlich den Blindstrom aufzubringen. Tabelle 2 zeigt die benötigte Eingangsspannung, bei der das Modem in Abhängigkeit von der ersten Kapazität $C_1$ anläuft. Diese Werte konnten durch Messungen in der Praxis ermittelt werden. Die erste Spalte zeigt dabei die verwendete erste Kapazität $C_1$, die zweite Spalte die notwendige erste Spannung $U_1$, die dritte Spalte die zweite Spannung $U_2$ am Versorgungsausgang und die vierte Spalte der jeweils fließende Strom $I_2$ (jeweils mit Blindanteilen als Angabe bei ±).

*Tabelle 2: Nötige Eingangsspannung in Abhängigkeit von der Koppelkapazität*

| $C_1$ | $U_1$ | $U_2$ | $I_2$ |
|---|---|---|---|
| 5,0 nF | 16,3 kV ± 0,6 kV | 280,0 V ± 3,1 V | 25,44 mA ± 0,55 mA |

(fortgesetzt)

| $C_1$ | $U_1$ | $U_2$ | $I_2$ |
|---|---|---|---|
| 8,0 nF | 10,1 kV $\pm$ 0,4 kV | 275,0 V $\pm$ 3,1 V | 24,69 mA $\pm$ 0,55 mA |
| 10,0 nF | 8,0 kV $\pm$ 0,3 kV | 2 61,2 V $\pm$ 2,9 V | 24,21 mA $\pm$ 0,54 mA |

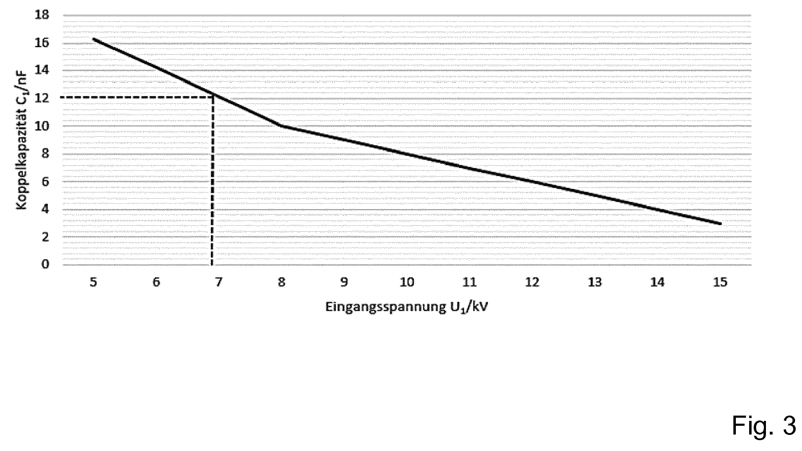

Die Spannung der 12 kV Freileitung entspricht einem Effektivwert im Hochspannungstechniklabor von ungefähr 6,9 kV. Beim Anlegen dieser Spannung soll das Modem anlaufen. Fig. 3 zeigt eine grafische Darstellung der Eingangsspannung $U_1$ in Abhängigkeit der ersten Kapazität $C_1$, wobei in Fig. 3 die in Tabelle 2 genannten Messwerte verwendet und alle weiteren Werte durch eine lineare Interpolation nachgebildet werden. Anhand Fig. 3 kann festgestellt werden, dass bei einer 12 kV Freileitung eine erste Kapazität $C1$ von ungefähr 12 nF benötigt wird.

$$\rightarrow C_1\,(12\text{ kV}) = 12\text{ nF}$$

Die nachfolgende Tabelle 3 zeigt die Auslegung für verschiedene Spannungsebenen, ausgehend jeweils von der zuvor dargestellten Dimensionierung für 12 kV. Die verschiedenen Teile der Tabelle 3 betreffen unterschiedliche erste Spannungen - 12 kV, 24 kV und 36 kV. In den Spalten der einzelnen Teile sind die Werte der ersten und zweiten Kapazität $C_1$ und $C_2$ sowie die sich am Versorgungsausgang einstellende Spannung $U_2$ und Strom $I_2$ sowie die abgegebene Leistung $P$ angegeben. Die einzelnen Spalten beziehen sich auf verschiedene Dimensionierungsziele:

- In der Spalte mit der Überschrift "$C_1$ konstant" sind alle Werte angegeben, bei denen die erste Kapazität $C_1$ konstant bei 12 nF belassen wurde. Die zweite Kapazität $C_2$ ist auf die jeweils geänderte erste Spannung $U_1$ angepasst.

- In der Spalte mit der Überschrift "$C_2$ konstant" ist die zweite Kapazität $C_2$ konstant bei 10 nF gehalten, während die erste Kapazität $C_1$ bei Änderung der ersten Spannung $U_1$ variiert wird.

- In der Spalte mit der Überschrift "$C_1$ und $C_2$ konstant" werden sowohl die erste als auch die zweite Kapazität konstant gehalten. Es ist zu erkennen, dass die Spannung am Versorgungsausgang $U_2$ ansteigt und damit eine Versorgung des Modems innerhalb der Grenzen der Eingangsspannung des Modems nicht mehr möglich ist. Bei einer ersten Spannung $U_1$ von 36 kV steigt die Spannung am Versorgungsausgang immerhin auf 800V. Da diese Werte nicht realistisch sind, sind sie in grauer Schriftfarbe geschrieben.

Daraus ergeben sich die folgenden Werte:

Tabelle 3: Auslegung des Energiekopplers ohne Blindleistungskompensation für die unterschiedlichen Spannungsebenen

| | | $C_1$ konstant | $C_2$ konstant | $C_1$ und $C_2$ konstant |
|---|---|---|---|---|
| 12 kV Freileitung | Kapazitäten | $C_1$ = 12 nF und $C_2$ = 10 nF | $C_1$ = 12 nF und $C_2$ = 10 nF | $C_1$ = 12 nF und $C_2$ = 10 nF |
| | Spannung $U_2$ | 261,6 V | 261,6 V | 261,6 V |
| | Strom $I_2$ | 11,5 mA | 11,5 mA | 11,5 mA |
| | Leistung P | 3,0 W | 3,0 W | 3,0 W |
| 24 kV Freileitung | Kapazitäten | $C_1$ = 12 nF und $C_2$ = 350 nF | $C_1$ = 6 nF und $C_2$ = 10 nF | |
| | Spannung $U_2$ | 261,6 V | 265,2 V | |
| | Strom $I_2$ | 11,5 mA | 11,7 mA | |
| | Leistung P | 3,0 W | 3,1 W | |

(fortgesetzt)

| | | $C_1$ konstant | $C_2$ konstant | $C_1$ und $C_2$ konstant |
|---|---|---|---|---|
| 36 kV Freileitung | Kapazitäten | $C_1$ = 12 nF und $C_2$ = 650 nF | $C_1$ = 4 nF und $C_2$ = 10 nF | |
| | Spannung $U_2$ | 261,6 V | 264,5 V | |
| | Strom $I_2$ | 11,7 mA | 11,8 mA | |
| | Leistung P | 3,1 W | 3,1 W | |

Die anderen Bauteile sind entsprechend dem Fall mit einer ohmschen Last auszulegen (siehe Abschnitt I).

Die Werte aus Tabelle 3 sind durch Simulation ermittelt. Dafür wurde das Modem als feste Impedanz unabhängig von der Eingangsspannung angenommen. Die Blindleistung wird zur Vereinfachung komplett als rein kapazitiv ausgedrückt. Die Werte entsprechen denen aus Tabelle 2 für eine Kapazität von 10 nF. Es werden nur die Beträge betrachtet

Messwerte:

- $U_1$ = 8 kV

- $U_2$ = 260 V

- $I_2$ = 24,2 mA (Wirk-und Blindstrom)

- Annahme: P= 3 W

Berechnung:

$$I_{2,Wirk} = \frac{P}{U_2} = \frac{3\,W}{260\,V} = 11,5\,mA$$

$$\cos\varphi = \frac{I_{2,Wirk}}{I_2} = 0,48$$

$$\sin\varphi = 0,88$$

$$I_{2,Blind} = \sin\varphi * I_2 = 0,91 * 25,6\,mA = 21,2\,mA$$

$$R = \frac{U_2}{I_{2,Wirk}} = \frac{260\,V}{11,5\,mA} = 22,6\,k\Omega$$

$$X = \frac{U_2}{I_{2,Blind}} = \frac{260\,V}{21,2\,mA} = 12,3\,k\Omega$$

$$X = \frac{1}{\omega C}$$

$$\rightarrow C = \frac{1}{\omega X} = \frac{1}{2\pi * 50\,Hz * 12,3\,k\Omega} = 0,26\,\mu F$$

Zusammenfassend kann mit Bezug auf dieses Ausführungsbeispiel festgestellt werden, dass abhängig von dem Vorhandensein einer Blindleistungskompensation eine unterschiedliche erste Kapazität $C_1$ notwendig ist. Für die Anpassung an unterschiedliche erste Spannungen an dem Energieversorgungsnetzwerk bietet sich an, die zweite Kapazität $C_2$ zu variieren.

Tabelle 4 gibt verschiedene mögliche Dimensionierungen der Schaltung nach Fig. 1 an:

*Tabelle 4: Zusammenfassung einer Auslegung der Bauteile*

|  | Mit Blindleistungskompensation | | | Ohne Blindleistungskompensation | | |
|---|---|---|---|---|---|---|
|  | 12 kV | 24 kV | 36 kV | 112 kV | 24 kV | 36 kV |
| $C_1$ | 5 nF | | | 12 nF | | |
| $C_2$ | 10 nF | 200 nF | 335 nF | 10 nF | 350 nF | 650 nF |
| $L$ | 2 mH | | | 2 mH | | |
| $R$ | 1 $\Omega$ | | | 1 $\Omega$ | | |

Hinsichtlich weiterer vorteilhafter Ausgestaltungen des erfindungsgemäßen Energiekopplers wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel des erfindungsgemäßen Energiekopplers lediglich zur Erörterung der beanspruchten Lehre dienen, diese jedoch nicht auf das Ausführungsbeispiel einschränken.

**Bezugszeichenliste**

| | |
|---|---|
| 1 | Energiekoppler |
| 2 | Versorgungseingang |
| 3 | Abgriff |
| 4 | Versorgungsausgang |
| $C_1$ | Erste Kapazität |
| $C_2$ | Zweite Kapazität |
| R | Ohmscher Widerstand (zur Schwingungsdämpfung) |
| L | Spule |
| $C_{Schutz}$ | Kapazität des Überspannungsableiters |
| $X_L$ | Impedanz des elektrischen Geräts |
| $U_1$ | Erste Spannung (am Energieversorgungsnetzwerk) |
| $U_2$ | Zweite Spannung (am Versorgungsausgang) |
| $I_2$ | Ausgangsstrom am Versorgungsausgang |
| $L_1, L_2, L_3$ | Leiter des Energieversorgungsnetzwerks |

**Patentansprüche**

1. Energiekoppler zum Versorgen eines elektrischen Gerätes aus einem Energieversorgungsnetzwerk, insbesondere eines Mittelspannungsnetzwerks, wobei der Energiekoppler (1) einen Spannungsteiler aufweist, der mit einem Versorgungseingang (2) des Energiekopplers (1) verbunden ist und eine erste Impedanz ($C_1$) und eine in Reihe geschaltete zweite Impedanz ($C_2$) aufweist, wobei ein Versorgungsausgang (4) des Energiekopplers (1) mit einem Abgriff (3) zwischen der ersten und der zweiten Impedanz ($C_1$, $C_2$) verbunden ist, wobei der Spannungsteiler dazu ausgebildet ist, aus einer an dem Versorgungseingang (2) anliegenden ersten Spannung ($U_1$) eine zweite Spannung ($U_2$) zu erzeugen und an dem Versorgungsausgang (4) eine vordefinierte Leistung ($P$) bereitzustellen, und wobei die erste Impedanz ($C_1$) derart dimensioniert ist, dass bei einer maximal zulässigen Spannung ($U_{max}$) am Versorgungsausgang (4) des Energiekopplers (1) zum Erreichen der vordefinierten Leistung ($P$) ein Mindeststrom ($\hat{I}_{min}$) durch die erste Impedanz ($C_1$) bereitgestellt werden kann.

2. Energiekoppler nach Anspruch 1, **dadurch gekennzeichnet, dass** die erste Impedanz und die zweite Impedanz jeweils durch eine Kapazität gebildet ist.

3. Energiekoppler nach Anspruch 2, **dadurch gekennzeichnet, dass** der Spannungsteiler zur Vermeidung eines hochfrequenten Kurzschlusses zusätzlich eine Spule (L) aufweist, die in Reihe zu der ersten und der zweiten Impedanz ($C_1$, $C_2$) geschaltet ist.

4. Energiekoppler nach Anspruch 2 oder 3, **dadurch gekennzeichnet, dass** der Spannungsteiler zur Reduzierung einer Schwingungsneigung einen ohmschen Widerstand (R) umfasst, der in Reihe zu der ersten und der zweiten Impedanz ($C_1$, $C_2$) geschaltet ist.

5. Energiekoppler einem der Ansprüche 1 bis 4, **dadurch gekennzeichnet, dass** die zweite Impedanz ($C_2$) derart dimensioniert ist, dass die Spannung ($U_2$) am Versorgungsausgang (4) bei einem Leerlauf am Versorgungsausgang (4) des Energiekopplers (1) einen oberen Spannungsgrenzwert nicht überschreitet.

6. Energiekoppler nach einem der Ansprüche 1 bis 5, **dadurch gekennzeichnet, dass** die Größe der zweiten Impedanz ($C_2$) an eine zu erwartende Spannung ($U_1$) an dem Versorgungseingang (2) angepasst ist.

7. Energiekoppler nach einem der Ansprüche 1 bis 6, **dadurch gekennzeichnet, dass** parallel zu dem Versorgungsausgang (4) des Energiekopplers ein Spannungsbegrenzer ($C_{Schutz}$), vorzugsweise ein Gasableiter, angeordnet ist.

8. Energiekoppler nach einem der Ansprüche 1 bis 7, **dadurch gekennzeichnet, dass** der Spannungsteiler derart dimensioniert ist, dass die erste Spannung ($U_1$) mindestens doppelt so groß ist wie die zweite Spannung ($U_2$), wobei die erste Spannung ($U_1$) vorzugsweise eine Mittelspannung und die zweite Spannung ($U_2$) vorzugsweise eine Niederspannung umfasst.

9. Energiekoppler nach einem der Ansprüche 1 bis 8, **dadurch gekennzeichnet, dass** die erste Impedanz ($C_1$) dazu ausgebildet ist, an dem Versorgungsausgang (4) zusätzlich zu dem Mindeststrom ($\hat{I}_{min}$) einen Blindstrom für das elektrische Gerät ($X_L$) bereitzustellen.

10. System bestehend aus einem Energiekoppler nach einem der Ansprüche 1 bis 9 und einem elektrischen Gerät, wobei das elektrische Gerät ($X_L$) mit dem Versorgungsausgang (4) des Energiekopplers (1) verbunden ist, wobei das elektrische Gerät ($X_L$) in einem Normalbetrieb eine vordefinierte Leistung (P) aus dem Energiekoppler (1) bezieht.

11. System nach Anspruch 10, **dadurch gekennzeichnet, dass** das elektrische Gerät ($X_L$) durch ein Powerline-Communication-Knoten, insbesondere ein Breitband-Powerline-Modem oder ein Breitband-Powerline-Gateway, gebildet ist und dass die erste Impedanz ($C_1$) vorzugsweise gleichzeitig als Koppelimpedanz für den Powerline-Communication-Knoten genutzt wird.

Fig. 1

Fig. 2

Fig. 3

Europäisches
Patentamt

European
Patent Office

Office européen
des brevets

**EUROPÄISCHER RECHERCHENBERICHT**

Nummer der Anmeldung

EP 16 18 2015

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 273 051 A (POVEY EDMUND H ET AL) 13. September 1966 (1966-09-13) | 1,2,4-6, 8,9 | INV. H02J11/00 H02M5/06 |
| Y | * Spalte 1, Zeile 10 - Spalte 2, Zeile 60; | 7 | |
| A | Abbildung 2 * | 3,10,11 | |
| | ----- | | |
| X | EP 2 552 002 A1 (ANN CHENG ENTPR CO LTD [CN]) 30. Januar 2013 (2013-01-30) | 1,2,5,6, 8 | |
| Y | * Absatz [0007] - Absatz [0020] * | 7 | |
| | ----- | | |
| X | US 7 304 872 B1 (YAKYMYSHYN CHRISTOPHER PAUL [US] ET AL) 4. Dezember 2007 (2007-12-04) | 1,2,4-6, 8 | |
| Y | * Spalte 1, Zeile 25 - Spalte 4, Zeile 36 * | 7 | |
| | ----- | | |
| Y | DE 10 2007 007921 A1 (SEW EURODRIVE GMBH & CO [DE]) 28. August 2008 (2008-08-28) * Absatz [0007] - Absatz [0009] * ----- | 7 | |
| | | | **RECHERCHIERTE SACHGEBIETE (IPC)** H02J H02M |

Der vorliegende Recherchenbericht wurde für alle Patentansprüche erstellt

| Recherchenort | Abschlußdatum der Recherche | Prüfer |
|---|---|---|
| München | 22. November 2016 | Jonda, Sven |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 16 18 2015

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-11-2016

| Im Recherchenbericht angeführtes Patentdokument | | Datum der Veröffentlichung | Mitglied(er) der Patentfamilie | Datum der Veröffentlichung |
|---|---|---|---|---|
| US 3273051 | A | 13-09-1966 | KEINE | |
| EP 2552002 | A1 | 30-01-2013 | KEINE | |
| US 7304872 | B1 | 04-12-2007 | KEINE | |
| DE 102007007921 | A1 | 28-08-2008 | KEINE | |

EPO FORM P0461

Für nähere Einzelheiten zu diesem Anhang : siehe Amtsblatt des Europäischen Patentamts, Nr.12/82